# EUROPÄISCHE PATENTSCHRIFT

(11) **EP 2 064 462 B1**
(45) Veröffentlichungstag und Bekanntmachung des Hinweises auf die Patenterteilung: **30.07.2014**
(21) Anmeldenummer: 07803479.0
(22) Anmeldetag: 13.09.2007
(51) Int. Cl.: F16G 11/00, D04G 1/00, A63B 9/00

(54) **VERBINDUNGSMITTEL FÜR ZWEI SICH KREUZENDE SEILSTRÄNGE VON SEILSPIELANLAGEN**
CONNECTING MEANS FOR TWO CROSSING CABLE STRANDS OF CABLE PLAY SYSTEMS
MOYEN DE RACCORDEMENT POUR DEUX BRINS DE CÂBLE SE CROISANT DANS DES JEUX DE CÂBLES

(30) Priorität: 13.09.2006 DE 102006043788; 13.09.2006 DE 202006014263 U
(43) Veröffentlichungstag der Anmeldung: 03.06.2009
(73) Patentinhaber: Berliner Seilfabrik GmbH & Co., 13407 Berlin (DE)
(72) Erfinder: KÖHLER, Karl-Heinz, 13467 Berlin (DE)
(74) Vertreter: Gulde & Partner
(86) Internationale Anmeldenummer: PCT/EP2007/059670
(87) Internationale Veröffentlichungsnummer: WO 2008/031877

(56) Entgegenhaltungen:
- EP-A- 0 017 837
- FR-A- 2 706 008
- GB-A- 618 940
- NL-C- 9 865
- NL-C- 64 832

## Beschreibung

Die Erfindung bezieht sich auf ein Verbindungsmittel für zwei sich kreuzende Seilstränge von Seilspielanlagen mit einer der Kleeblattform angepassten inneren Seilführungsöffnung, in der in einem Umschlingungsbereich seilstränge, unter einem Umschlingungswinkel abgelenkt, fixiert sind.

Verbindungsmittel für sich kreuzende Seilstränge von Netzen, insbesondere von Netzen die in Seilspielanlagen für Kinder Verwendung finden, sind bekannt. In der DE 29 14 885 C2 wird ein ringförmiges Verbindungsmittel für sich kreuzende Seilstränge beschrieben, wobei das Verbindungsmittel in den Ecken der sich kreuzenden Seilstränge nach innen eingebogen ist, so dass eine kreuzartige Innenkontur mit abgerundeten äußeren Enden und Rundungen an den Einbiegungen gebildet wird, so dass eine kleeblattartige Form entsteht. Diese auch als Kleeblattringe bezeichneten Verbindungsmittel haben gegenüber einer Verbindungsart Vorteile, die teilweise verpresste Kreuzungspunkte aufweist, bei denen entweder Stahl-, S-Haken- oder Aluminiumformteile eingesetzt werden. Mit diesen Kleeblattringen ist es möglich, ohne Hilfsmittel die einfache Montage und Positionierung sowie die einfache Lösbarkeit der Verbindung zu erreichen. Somit können ohne Zuhilfenahme von schweren Werkzeugen und ohne den anderen nichtbeschädigten Seilstrang in Mitleidenschaft zu ziehen, einzelne Seilelemente gegebenenfalls ausgetauscht werden. Nachteile dieser sogenannten Kleeblattringe ist, dass es einer eindeutigen Geometrie in nerhalb des Netzes bedarf und die Spannungen in den Seilsträngen möglichst gleich sein müssen, um zu gewährleisten, dass sich der Kreuzungspunkt der beiden Seilstränge bei direkter Belastung nicht verschiebt. Durch die zum Teil gewollte Flexibilität der Seilstränge kann es bei ungleicher Strangbelastung nachteiligerweise zur Veränderung der Lage des Kleeblattringes im Seilumschlingungsbereich kommen, so dass der eine Seilstrang kaum mehr durch den Kleeblattring verformt wird und leicht bei Belastung über das andere Seilelement gleiten kann.

Ein weiteres derartiges Verbindungsmittel ist aus EP 0 017 837 A1 bekannt.

Aufgabe der Erfindung ist es ein Verbindungsmittel anzugeben, das die Vorteile einer festen Verpressung, die Unverrückbarkeit und die schnelle Montage bzw. Demontage der sogenannten Kleeblattringe vereint. Hierbei sollte eine Form gefunden werden, die eine eindeutigere Verformung der Seilstränge im Umschlingungsbereich bewirkt und gegebenenfalls über ein zusätzliches Element der Umschlingungsbereich in seiner Lage eindeutig fixiert wird.

Die Lösung der Aufgabe erfolgt mit einem Verbindungsmittel für zwei sich kreuzende Seilstränge von Seilspielanlagen mit einer der Kleeblattform angepassten inneren Seilführungsöffnung, in der in einem Umschlingungsbereich die Seilstränge, unter einem Umschlingungswinkel abgelenkt, fixierbar sind und das dadurch gekennzeichnet ist, dass ein Abstand zwischen einer oberen und unteren Kante einer Wandung des Verbindungsmittels, auf denen die beidseitig abgewinkelt entgegengesetzt aus der Seilführungsöffnung herausgeführten Seilstränge aufliegen gleich oder größer als ein Seildurchmesser der zu verbindenden Seilstränge ist.

Ein größerer Abstand der oberen und unteren Kante des Verbindungsmittels führt zu einem größeren Umschlingungswinkel der beiden Seilstränge und vergrößert damit die Reibung zwischen den Seilsträngen und somit auch die Haltbarkeit des Verbindungspunktes.

Vorteilhafte Weiterbildungen sind in den Unteransprüchen angegeben.

In einer weiteren Ausgestaltung weist die Wandung des Verbindungsmittels Aussparungen auf. Damit ist vorteilhafterweise eine Materialeinsparung möglich, ohne dass die Stabilität des Verbindungsmittels beeinträchtigt wird.

Eine weitere Ausgestaltung sieht vor, dass die obere und untere Kante der Wandung, auf denen die beidseitig abgewinkelt entgegengesetzt aus der Seilführungsöffnung herausführbaren Seilstränge aufliegen, als Auflagemulde für die Seilstränge ausgebildet ist. Die Auflagemulden ermöglichen eine sichere, rutschfeste Fixierung der herausgeführten Seilstränge,

Eine weitere Ausgestaltung der Erfindung sieht vor, dass die Wandungen zwei gegenüberliegende Bohrungen senkrecht zur Achse des Verbindungsmittels für die Aufnahme eines Stiftes aufweist. Durch einen direkt nach dem Einfädeln der Seilstränge oder auch nachträglich in die Bohrungen zwischen den beiden Seilsträngen eingebrachte Stift, der rechtwinklig zur Verbindungsmittelachse liegt, wird der Umschlingungsbereich eindeutig definiert und eine maximale Reibhaftung zwischen den Seilen und dem Verbindungsmittel gewährleistet.

Im bekannten Verbindungsmittel, das im Bezug zum Seildurchmesser eine Höhe des halben Seildurchmessers aufweist, werden die Seilstränge im Idealfall um 90° abgelenkt. Eine Ablenkung entgegen der eigentlichen Biegerichtung findet dagegen nicht statt. Dagegen ist das erfindungsgemäße Verbindungsmittel so geschaffen, dass das Seil vor dem eigentlichen Richtungswechsel um bis 45° entgegen der Umschlingungsrichtung gebogen wird und nach einer kurzen geraden Strecke, die etwa der Hälfte der Höhe des Verbindungsmittels entspricht, im Umschlingungsbereich um 180° umgelenkt wird und dann mit einer weiteren Biegung von 45° den Umschlingungsbereich wieder verlässt. Je größer der Umschlingungswinkel ist, desto größer ist die Reibung zwischen den Seilsträngen und somit die Haltbarkeit des Verbindungspunktes der beiden Seilstränge.

Die Erfindung wird anhand von Zeichnungen beispielhaft näher erläutert.

Es zeigen
- Fig. 1a: eine geschnittene, schematische Darstellung des erfindungsgemäßen Verbindungsmittels mit einem Umschlingungswinkel der Seilstränge von 180°,
- Fig. 1b: eine schematische, perspektivische Darstellung eines erfindungsgemäßen Verbindungsmittels mit einem Umschlingungswinkel der Seilstränge von 180°
- Fig. 2a: eine geschnittene, schematische Darstellung eines Verbindungsmittels des Standes der Technik mit einem Umschlingungswinkel der Seilstränge von 90°,
- Fig. 2b: eine schematische, perspektivische Darstellung eines Verbindungsmittels des Standes der Technik mit einem Umschlingungswinkel der Seilstränge von 90°,
- Fig. 3a: eine schematische, perspektivische Darstellung eines erfindungsgemäßen Verbindungsmittels mit zwei nach oben bzw. nach unten abgewinkelten Kleeblättern,
- Fig. 3b: eine Draufsicht des Verbindungsmittels gem. Fig. 3a,
- Fig. 3c: eine Seitenansicht des Verbindungsmittels gem. Fig. 3a,
- Fig. 3d: eine weitere Seitenansicht eines Verbindungsmittels gem. Fig. 3a,
- Fig. 4a: eine schematische, perspektivische Darstellung eines Verbindungsmittels mit Aussparungen,
- Fig. 4b: eine Draufsicht des Verbindungsmittels gem. Fig. 4a,
- Fig. 4c: eine Seitenansicht des Verbindungsmittels gem. Fig. 4a,
- Fig. 4d: eine Schnittdarstellung des Verbindungsmittels gem. Fig. 4a,
und
- Fig. 4e: eine weitere Schnittdarstellung des Verbindungsmittels gem. Fig. 4a.

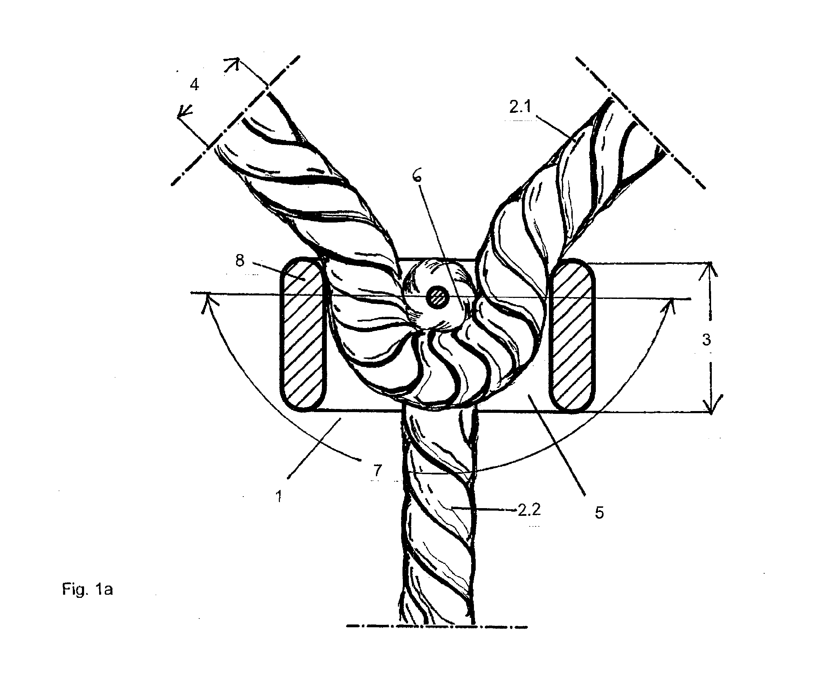

In Fig. 1a zeigt ein erfindungsgemäßes, geschnittenes Verbindungsmittel 1. In einer Seilführungsöffnung 5 des Verbindungsmittels 1 befinden sich zwei, sich kreuzende Seilstränge 2.1 und 2.2. Eine Wandung 8 des Verbindungsmittels 1 weist eine Höhe 3 auf. Der Seilstrang 2.1 und der Seilstrang 2.2 kreuzen sich in einem Umschlingungsbereich 6. Der sich hierbei bildende Umschlingungswinkel 7 beträgt etwa 180°, so dass im Umschlingungsbereich 6 eine enge Kontaktierung mit großer Reibhaftung zwischen dem Seilstrang 2.1 und dem Seilstrang 2.2 entsteht, die ein Verrutschen der Seilstränge 2.1 und 2.2 weitestgehend unterbindet. Verantwortlich dafür ist die Höhe 3 der Wandung 8, die die Seilstränge 2.1 und 2.2 in diesen Umschlingungswinkel 7 zwingt. Die Höhe 3 der Wandung 8 des Verbindungsmittels 1 beträgt hier etwa das zweifache des Seildurchmessers 4.

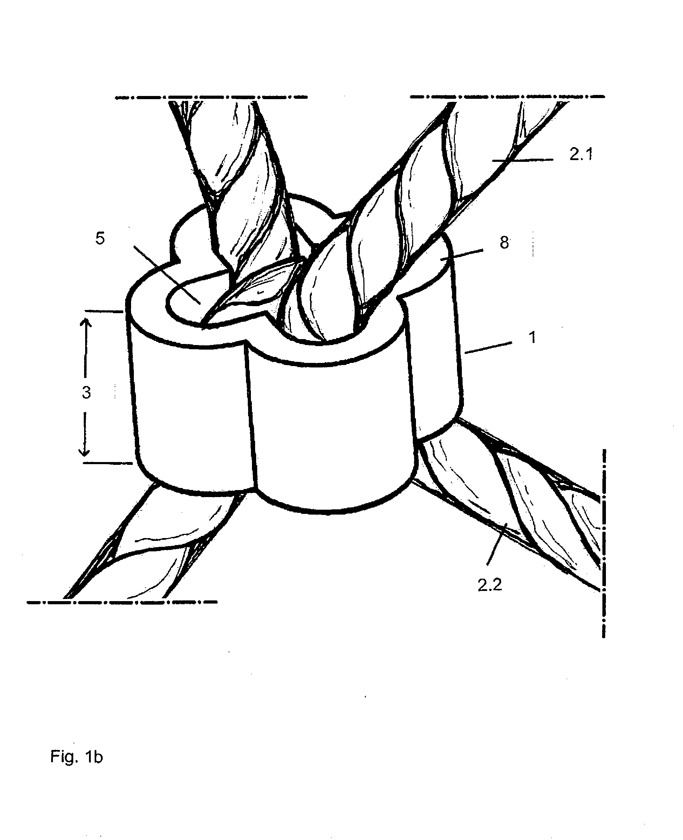

In Fig. 1b zeigt das erfindungsgemäße Verbindungsmittel 1 in perspektivischer Darstellung. Das Verbindungsmittel 1 weist ein kleeblattförmigen Querschnitt auf. Die Seilstränge 2.1 und 2.2 kreuzen sich in der Seilführungsöffnung 5 und bilden aufgrund der Höhe 3 der Wandung 8 einen Umschlingungswinkel 7 von ca. 180°.

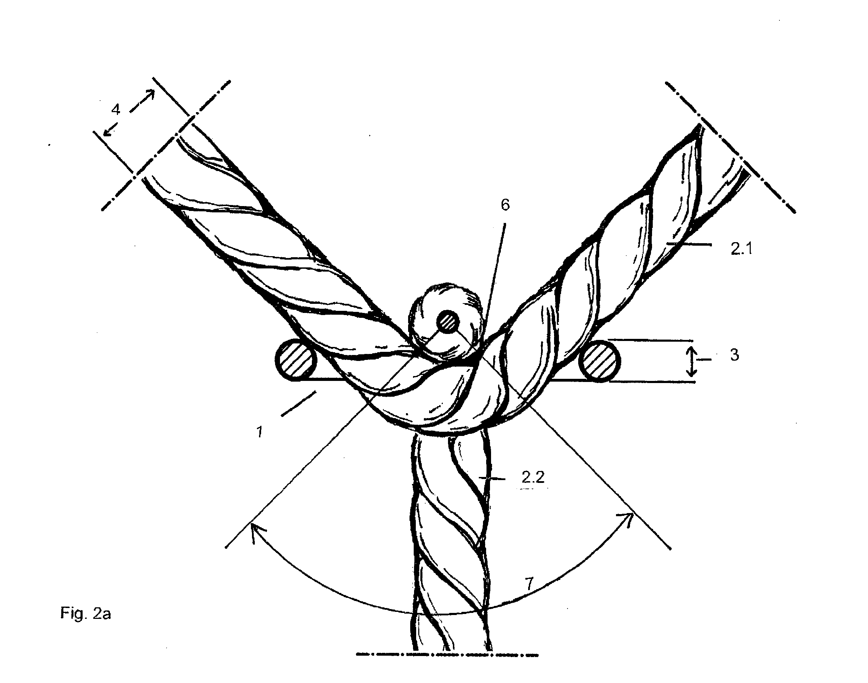

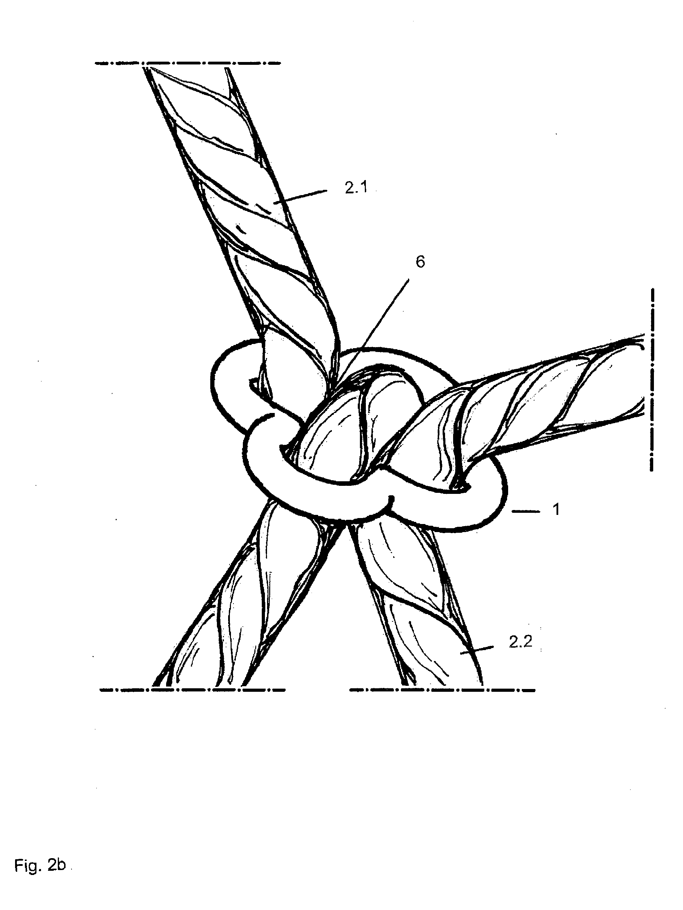

In Fig. 2a und Fig. 2b ist ein Verbindungsmittel 1 des Standes der Technik dargestellt. Das Verbindungsmittel 1 ist ebenfalls kleeblattförmig und weist eine ebene Form auf. Die Höhe 3 der Wandung 8 ist deutlich kleiner als der Seildurchmesser 4, so dass sich nur ein Umschlingungswinkel 7 von etwa 90 ° der Seilstränge 2.1 und 2.2 ausbildet, der im Umschlingungsbereich 6 zu einer geringeren Kontaktierungsfläche der Seilstränge 2.1 und 2.2 nachteiligerweise führt, was eine deutlich geringere Reibhaftung der Seilstränge 2.1 und 2.2 bewirkt.

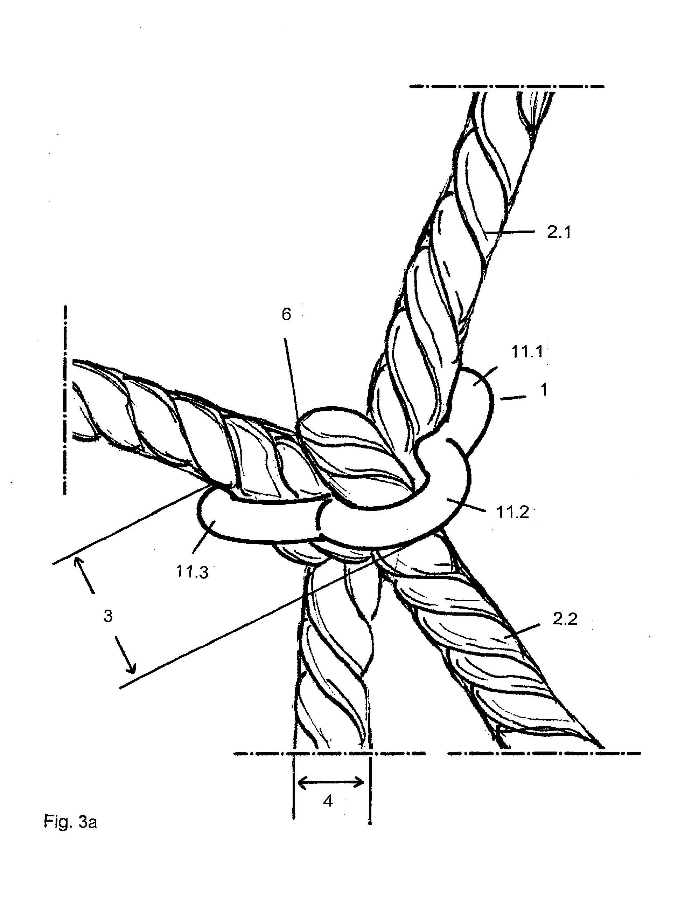

In Fig. 3a ist in einer anderen Ausgestaltung ein weiteres erfindungsgemäßes Verbindungsmittel 1 perspektivisch dargestellt. Jeweils zwei gegenüberliegende Kleeblätter 11.1 und 11.3 sowie 11.2 und 11.4 sind nach oben bzw. nach unten abgewinkelt, so dass hier eine Höhe 3 entsteht, die größer als der Seildurchmesser 4 ist, womit vorteilhafterweise im Umschlingungsbereich 6 der Seilstränge 2.1 und 2.2 ein Umschlingungswinkel 7 von etwa 180° erreicht wird.

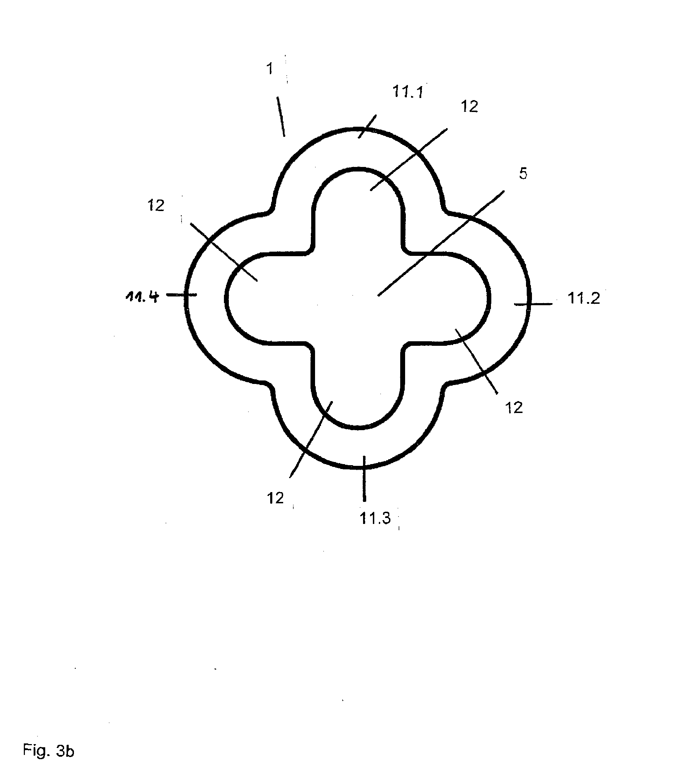

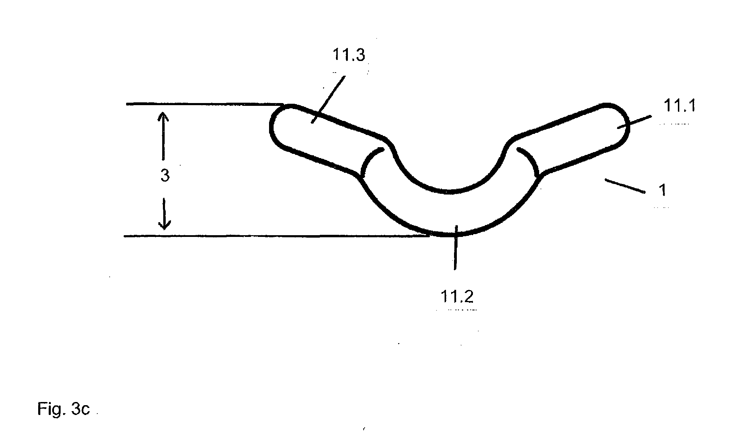

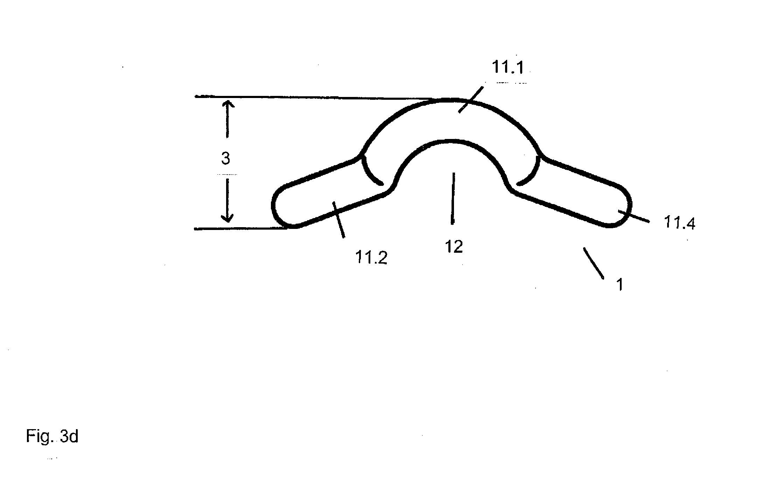

In Fig. 3b, Fig. 3c und Fig. 3d ist dieses Verbindungsmittel 1 in Draufsicht und in Seitenansicht dargestellt. Die Draufsicht gem. Fig. 3b zeigt den kleeblattförmigen Querschnitt mit den jeweils sich gegenüberstehenden Kleeblättern 11.1 und 11.3 sowie 11.2 und 11.4. Die hier nicht dargestellten Seilstränge 2.1 und 2.2 werden in Einlagemulden 12 der Seilführungsöffnung 5 fixiert.

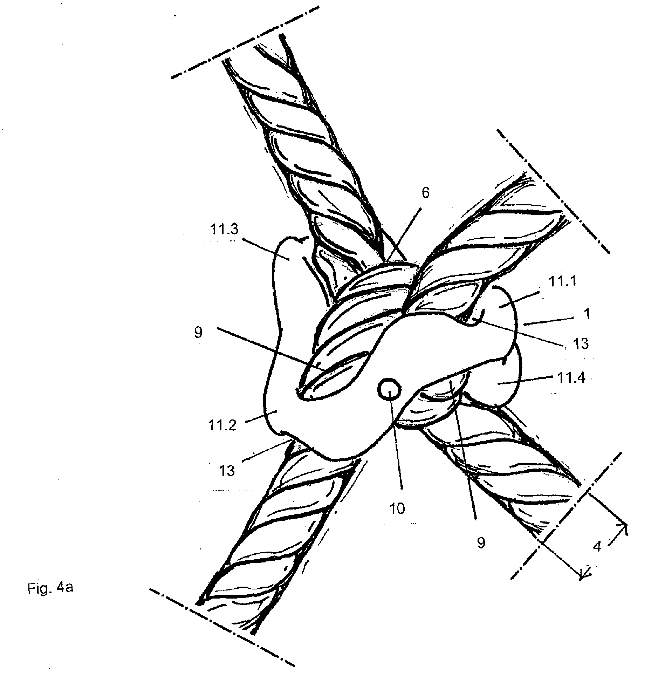

In Fig. 4a wird eine weitere Ausgestaltung des erfindungsgemäßen Verbindungsmittels 1 perspektivisch dargestellt.

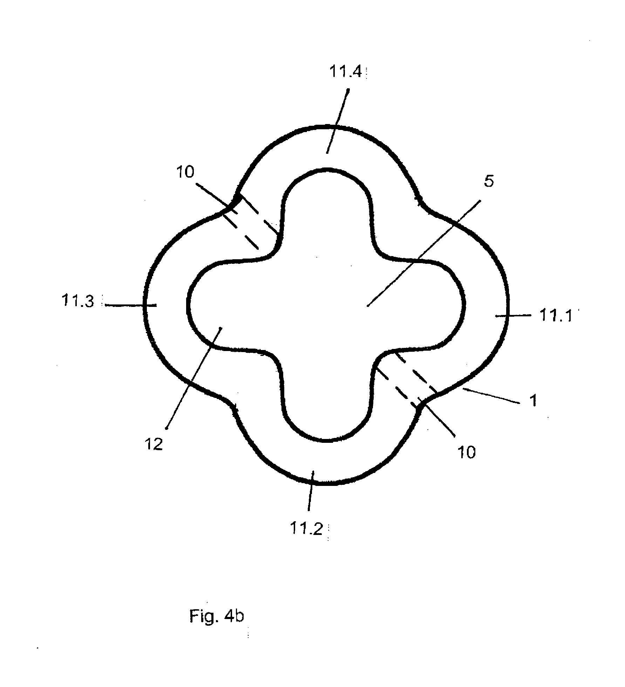

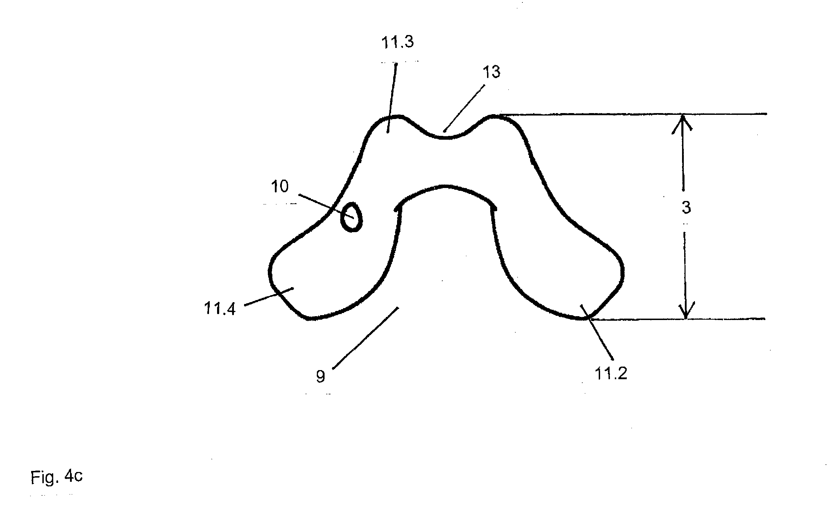

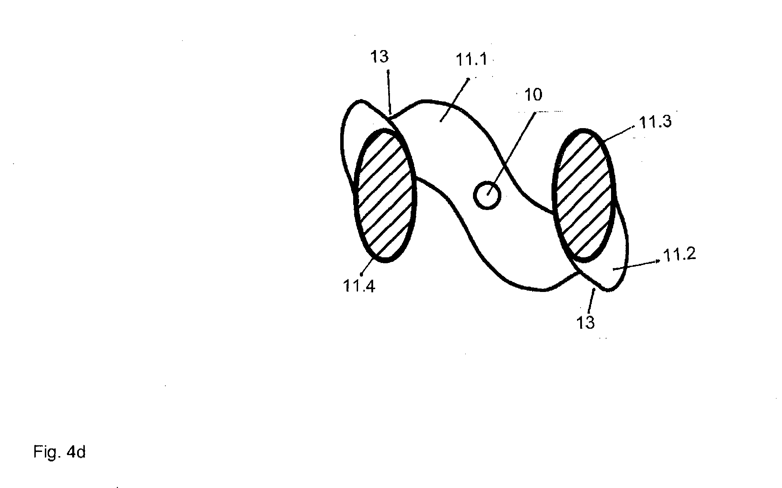

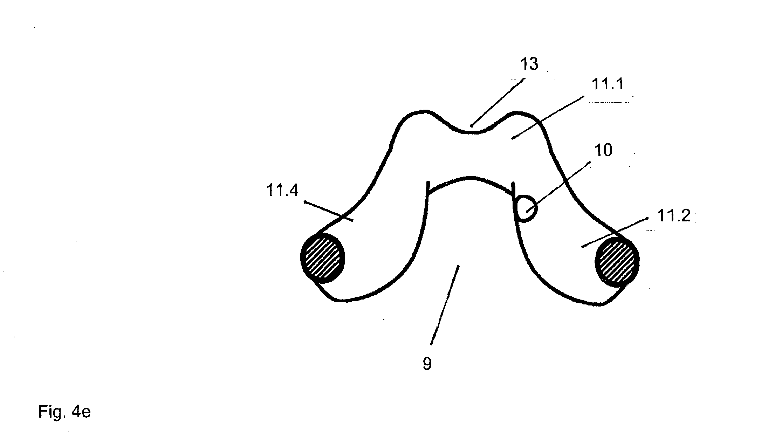

Weitere Ansichten dieses Verbindungsmittels sind in Fig. 4b, Fig. 4c, Fig. 4d und Fig. 4e dargestellt. Dieses Verbindungsmittel 1 weist zwei gegenüberliegende Bohrungen 10 in der Wandung 8 auf, durch die vorteilhafterweise ein hier nicht dargestellter Stift einführbar ist und als zusätzliches Fixierungselement für den Umschlingungsbereich 6 dienen kann. Dabei wird der Stift durch die eine Bohrung 10 zwischen den beiden Seilsträngen 2.1 und 2.2 durch den Umschlingungsbereich 6 hindurch in die zweite Bohrung 10 geführt. Aussparungen 9 führen zu einer Reduzierung der Masse des Verbindungselementes 1, so dass das Verbindungselement 1 von Massen befreit wird, die nicht für die Sicherstellung der eindeutigen Umschlingung der Seilstränge 2.1 und 2.2 notwendig sind. Sowohl die sich auf einer Ebene gegenüberstehenden Kleeblätter 11.1 und 11.3 und die auf einer unteren Ebene befindlichen Kleeblätter 11.2 und 11.4 weisen jeweils eine Auflagemulde 13 auf, in der die aus den Einlagemulden 12 der Kleeblätter 11.1, 11.2, 11.3 und 11.4 herausführenden Seilstränge 2.1 und 2.2 eindeutig geführt werden.

### Bezugszeichenliste

- 1: Verbindungsmittel

- 2.1: Seilstrang
- 2.2: Seilstrang

- 3: Höhe
- 4: Seildurchmesser
- 5: Seilführungsöffnung
- 6: Umschlingungsbereich
- 7: Umschlingungswinkel
- 8: Wandung
- 9: Aussparung
- 10: Bohrung

- 11.1: Kleeblatt
- 11.2: Kleeblatt
- 11.3: Kleeblatt
- 11.4: Kleeblatt

- 12: Einlagemulde
- 13: Auflagemulde

## Patentansprüche

1. Kombination eines Verbindungsmittels (1) und zweier sich kreuzender Seilstränge (2.1, 2.2) von Seilspielanlagen, mit einer der Kleeblattform angepassten inneren Seilführungsöffnung (5), mit einem Umschlingungsbereich (6) für die Seilstränge (2.1, 2.2), in der die Seilstränge (2.1, 2.2) unter einem Umschlingungswinkel (7) abgelenkt, fixierbar sind,
**dadurch gekennzeichnet, dass**
ein Abstand (3) zwischen einer oberen und unteren Kante einer Wandung (8) des Verbindungsmittels (1), auf denen die beidseitig abgewinkelt entgegengesetzt aus der Seilführungsöffnung (5) herausgeführten Seilstränge (2.1, 2.2) aufliegen gleich oder größer als ein Seildurchmesser (4) der verbundenen Seilstränge (2.1, 2.2) ist.

2. Kombination nach Anspruch 1,
**dadurch gekennzeichnet, dass**
die obere und untere Kante der Wandung (8), auf denen die abgewinkelt entgegengesetzt aus der Seilführungsöffnung (5) herausgeführten Seilstränge (2.1, 2.2) aufliegen, als Auflagenmulde (13) für die Seilstränge (2.1, 2.2) ausgebildet ist.

3. Kombination nach einem der Ansprüche 1 bis 2,
**dadurch gekennzeichnet, dass**
die Wandung (8) masseverringernde Aussparungen (9) aufweist.

4. Kombination nach einem der Ansprüche 1 bis 3,
**dadurch gekennzeichnet, dass**
die Wandung (8) zwei gegenüberliegende Bohrungen (10) senkrecht zur Achse des Verbindungsmittels (1) für die Aufnahme eines Stiftes aufweist.

## Claims

1. A combination of a connecting means (1) and two crossing cable strands (2.1, 2.2) of cable play systems, with a cloverleaf-shaped internal cable guide opening (5), with a region of entwinement (6) for the cable strands (2.1, 2.2), in which cable guide opening the cable strands (2.1, 2.2) deflected at an angle of entwinement (7) can be fixed,
**characterized in that**
a distance (3) between an upper edge and a lower edge of a wall (8) of the connecting means (1) is equal to or greater than a cable diameter (4) of the connected cable strands (2.1, 2.2), on which edges the cable strands (2.1, 2.2) guided out of the cable guide opening (5) in opposite directions while being angled on both sides rest.

2. The combination according to claim 1,
**characterized in that**
the upper edge and the lower edge of the wall (8) on which the cable strands (2.1, 2.2) guided out of the cable guide opening (5) in opposite directions while being angled rest is formed as a supporting depression (13) for the cable strands (2.1, 2.2).

3. The combination according to any one of claims 1 to 2,
**characterized in that**
the wall (8) has mass-reducing recesses (9).

4. The combination according to any one of claims 1 to 3,
**characterized in that**
the wall (8) has two bores (10) for accommodating a pin, said bores being arranged opposite each other and perpendicular to the axis of the connecting means (1).

## Revendications

1. Combinaison d'un moyen de raccordement (1) et de deux brins de câble (2.1, 2.2) se croisant dans des jeux de câbles, avec une ouverture de guidage de câble (5) interne adaptée à la forme de feuille de trèfle, avec une zone d'entrelacement (6) pour les brins de câble (2.1, 2.2), dans laquelle les brins de câble (2.1, 2.2) déviés selon un angle d'entrelacement (7) peuvent être fixés,
**caractérisée en ce**
**qu'**une distance (3) entre une arête supérieure et une arête inférieure d'une paroi (8) du moyen de raccordement (1), sur lesquelles reposent les brins de câble (2.1, 2.2) guidés hors de l'ouverture de guidage de câble (5) d'une façon déviée des deux côtés de façon opposée, est égale ou supérieure à un diamètre de câble (4) des brins de câble (2.1, 2.2) raccordés.

2. Combinaison selon la revendication 1,
**caractérisée en ce que**
l'arête supérieure et l'arête inférieure de la paroi (8), sur lesquelles reposent les brins de câble (2.1, 2.2) guidés hors de l'ouverture de guidage de câble (5) d'une façon déviée des deux côtés de façon opposée, sont constituées en tant que cuvette d'appui (13) pour les brins de câble (2.1, 2.2).

3. Combinaison selon une des revendications 1 à 2,
**caractérisée en ce que**
la paroi (8) présente des évidements (9) réduisant la masse.

4. Combinaison selon une des revendication 1 à 3,
**caractérisée en ce que**
la paroi (8) présente deux alésages (10) opposés, perpendiculairement à l'axe du moyen de raccordement (1) pour la réception d'une broche.
